# FASCICULE DE BREVET EUROPEEN

(11) **EP 3 707 772 B1**
(45) Date de publication et mention de la délivrance du brevet: **24.05.2023**
(21) Numéro de dépôt: 18847237.7
(22) Date de dépôt: 20.12.2018
(51) Int. Cl.: H01M 10/625, H01M 10/6556, H01M 10/613

(54) **ÉLÉMENT DE REFROIDISSEMENT D'UN DISPOSITIF DE STOCKAGE ÉLECTRIQUE POUR VÉHICULE AUTOMOBILE**
KÜHLELEMENT EINER ELEKTRISCHEN SPEICHERVORRICHTUNG FÜR EIN KRAFTFAHRZEUG
COOLING ELEMENT OF AN ELECTRICAL STORAGE DEVICE FOR A MOTOR VEHICLE

(30) Priorité: 20.12.2017 FR 1762576
(43) Date de publication de la demande: 16.09.2020
(73) Titulaire: Valeo Systemes Thermiques, 78322 Le Mesnil Saint-Denis Cedex (FR)
(72) Inventeur: TUDEAU, Eric, 72210 LA SUZE SUR SARTHE (FR); TISON, Frédéric, 72210 LA SUZE SUR SARTHE (FR); MULLER, Jean Damien, 72210 LA SUZE SUR SARTHE (FR); NGUYEN, Dinh-Luyen, 78322 LE MESNIL SAINT DENIS CEDEX (FR); PEREIRA, Daniel, 78322 LE MESNIL SAINT DENIS CEDEX (FR); DORMOY, Patrick, 78322 LE MESNIL SAINT DENIS CEDEX (FR); GIRARD, Nathalie, 78322 LE MESNIL SAINT DENIS CEDEX (FR); FERNANDES PEREIRA DA VENDA, Fernando, 78322 LE MESNIL SAINT DENIS CEDEX (FR); MARTIN, Benoît, 72210 LA SUZE SUR SARTHE (FR)
(74) Mandataire: Valeo Systèmes Thermiques
(86) Numéro de dépôt international: PCT/FR2018/053492
(87) Numéro de publication internationale: WO 2019/122771

(56) Documents cités:
- WO-A1-2017/086664
- US-A- 5 460 900
- US-A1- 2013 266 838
- US-A1- 2015 140 388

## Description

### 1. Domaine technique de l'invention

Le domaine de la présente invention concerne la régulation thermique d'un dispositif de stockage électrique, et plus particulièrement, la présente invention se rapporte à la régulation thermique d'un dispositif de stockage électrique destiné aux véhicules automobiles électriques ou hybrides.

### 2. Etat de la technique

L'énergie électrique des véhicules à motorisation électrique et/ou hybride est fournie par une ou plusieurs batteries.

Dans ce type de véhicule, l'énergie électrique est fournie par une pluralité de cellules électriques assemblées de sorte à former un module électrique

Un dispositif de stockage électrique, formé de plusieurs modules électriques, peut ensuite être disposé dans un boîtier de protection de sorte à ce que l'ensemble forme ce que l'on appelle un pack-batterie.

Un problème posé réside dans le fait que durant son fonctionnement, le dispositif de stockage électrique est amené à chauffer et risque de ce fait de s'endommager.

Par ailleurs, en cas de température trop basse, l'autonomie du dispositif de stockage électrique peut décroître fortement.

La régulation thermique de ce dispositif de stockage électrique est, par conséquent, un point important afin de maintenir celle-ci à une température acceptable.

En effet, la température du dispositif de stockage électrique doit rester comprise entre 20°C et 40°C afin d'assurer la fiabilité, l'autonomie, et la performance du véhicule, tout en optimisant la durée de vie de ce dispositif de stockage électrique.

Cette régulation de la température du dispositif de stockage électrique, notamment son refroidissement, est notamment assurée au moyen d'un fluide caloporteur qui circule dans des dispositifs de régulation thermique placés à l'intérieur du boîtier de protection du pack-batterie.

Ces dispositifs de régulation thermique prennent la forme d'échangeurs thermiques à tubes ou plaques.

Un exemple d'un tel dispositif est illustré dans le document US 2015/140388 A1, qui illustre module de batterie possédant deux plaques de refroidissement latérales ainsi qu'une plaque de refroidissement inférieur servant de support au module. Le fluide de refroidissement de la plaque inférieure peut être circulé dans les plaques latérales.

En règle générale, les dispositifs de régulation thermique sont disposés au fond du boîtier de protection du pack-batterie, sous les modules électriques.

Toutefois, la tenue mécanique de tels dispositifs de régulation thermique est relativement faible, ce qui peut poser problème en cas de chocs (survenant lors d'un accident du véhicule, par exemple).

En outre, lorsque les dispositifs de régulation thermique sont disposés à l'intérieur du pack batterie, il existe un risque de destruction des modules en cas de fuites du fluide caloporteur dans l'enceinte intérieure du pack batterie.

Un autre inconvénient de cette approche réside dans le fait que l'espace alloué à la réception des modules de batterie au sein du pack batterie est réduit du fait de la présence des dispositifs de régulation thermique qui sont relativement encombrants.

Ainsi, la puissance et l'autonomie électrique du véhicule ne sont pas maximisées.

### 3. Exposé de l'invention

L'invention a pour but de pallier au moins certains des inconvénients de l'art antérieur cité ci-dessus

A cet effet, l'invention a pour objet un élément de refroidissement d'un dispositif de stockage électrique pour véhicule automobile comprenant au moins une première paroi s'étendant principalement dans un premier plan et dans laquelle est ménagé au moins un premier canal et au moins une deuxième paroi s'étendant principalement dans un deuxième plan et dans laquelle est ménagé au moins un deuxième canal, le premier canal et le deuxième canal étant aptes à être empruntés par un fluide caloporteur. Selon l'invention le premier plan dans lequel s'étend la première paroi et le deuxième plan dans lequel s'étend la deuxième paroi sont sécants, et au moins la première paroi est configurée pour porter le dispositif de stockage électrique.

On entend par « première paroi configurée pour porter le dispositif de stockage électrique » le fait que cette première paroi est suffisamment rigide pour servir de support au dispositif de stockage électrique. Avantageusement, le fluide caloporteur qui circule dans le premier canal et dans le deuxième canal peut être un fluide de refroidissement.

Selon une caractéristique de la présente invention, le dispositif de stockage électrique est agencé au contact de la première paroi et de la deuxième paroi.

Ainsi, l'élément de refroidissement selon la présente invention remplit à la fois une fonction structurelle de support du dispositif de stockage électrique et une fonction de régulation thermique, notamment de refroidissement, de ce dispositif de stockage électrique, grâce à des canaux ménagés, au moins pour partie, directement dans la première paroi qui participe à la fonction structurelle dudit élément de refroidissement. Les première et deuxième parois de l'élément de refroidissement sont ainsi des parois de support et de régulation thermique.

Les canaux ménagés au sein des parois de l'élément de refroidissement sont dimensionnés de sorte à assurer l'intégrité du dispositif de stockage électrique malgré les contraintes mécaniques courantes et accidentelles de la vie du véhicule et le transport d'un fluide caloporteur, tout en préservant l'étanchéité du circuit de circulation du fluide caloporteur.

Deux fonctions étant assurées par une unique pièce, l'approche de l'invention permet de minimiser l'encombrement global d'un système de traitement thermique comprenant l'élément de refroidissement selon l'invention et le dispositif de stockage électrique.

Par exemple, le premier plan dans lequel s'étend principalement la première paroi et le deuxième plan dans lequel s'étend principalement la deuxième paroi peuvent être perpendiculaires.

Les dispositifs de stockage électrique étant en général de forme parallélépipédique, un tel agencement des première et deuxième parois permet d'optimiser l'agencement de ceux-ci sur l'ensemble de refroidissement et de minimiser l'encombrement d'un système de traitement thermique intégrant un tel ensemble de refroidissement. De plus, les dispositifs de stockage électriques étant, selon cet exemple, au contact de la première et de la deuxième paroi de l'élément de refroidissement, leur régulation thermique est optimisée.

Selon l'invention, l'élément de refroidissement comprend des moyens de connexion fluidique configurés pour connecter le premier canal ménagé dans la première paroi au deuxième canal ménagé dans la deuxième paroi, chaque moyen de connexion fluidique étant ménagé au sein desdites première et deuxième parois.

Le fait que les connexions fluidiques entre les canaux soient ménagées dans l'épaisseur des parois de l'élément de refroidissement, permet de s'affranchir de connectiques externes, et donc de minimiser les risques de fuites de fluide caloporteur, et de réduire l'encombrement de l'élément de refroidissement.

Selon l'invention l'élément de refroidissement peut également comprendre au moins une première conduite destinée à alimenter le premier et/ou le deuxième canal en fluide caloporteur et au moins une deuxième conduite destinée à évacuer le fluide caloporteur circulant dans le premier et/ou le deuxième canal, la première conduite et la deuxième conduite étant ménagées dans la deuxième paroi de l'élément de refroidissement.

De nouveau, le fait que les conduites d'amenée du fluide caloporteur vers les canaux et d'évacuation du fluide provenant des canaux soient ménagées dans l'épaisseur des parois de l'élément de refroidissement, permet de réduire l'encombrement de cet élément de refroidissement en s'affranchissant de connectiques externes (tuyaux, par exemple).

La suppression de telles connectiques externes permet en outre de minimiser les risques de fuites de fluide caloporteur.

Selon un autre aspect particulier de l'invention, l'élément de refroidissement comprend plusieurs conduites d'alimentation et d'évacuation de fluide caloporteur.

Une telle configuration permet de minimiser les pertes de charge du fluide caloporteur dans le circuit de circulation du fluide ménagé au sein des parois de l'élément de refroidissement.

Selon une caractéristique de la présente invention, l'élément de refroidissement comprend au moins une bride de raccordement fluidique configuré pour raccorder l'élément de refroidissement à un circuit externe par l'intermédiaire de la première et/ou de la deuxième conduite.

Une telle bride de raccordement est fixée mécaniquement et de façon étanche sur une surface extérieure de l'élément de refroidissement. On entend par « surface extérieure de l'élément de refroidissement » une surface de cet élément de refroidissement tournée à l'opposé du dispositif de stockage électrique supporté par cet élément de refroidissement.

Cette bride de raccordement relie fluidiquement un circuit de circulation de fluide caloporteur interne à l'élément de refroidissement à un circuit externe à cet élément de refroidissement.

L'élément de refroidissement selon l'invention peut également comprendre une troisième paroi s'étendant principalement dans un troisième plan, ce troisième plan étant parallèle au premier plan dans lequel s'étend la première paroi et sécant du deuxième plan dans lequel s'inscrit la deuxième paroi, la bride de raccordement fluidique étant alors fixée sur cette troisième paroi.

Avantageusement, cette troisième paroi peut être configurée pour porter un dispositif de stockage électrique qui alors agencé au contact de la troisième paroi et de la deuxième paroi. La régulation thermique de ce dispositif de stockage électrique est alors assurée uniquement par le fluide caloporteur circulant dans le deuxième canal ménagé dans la deuxième paroi. Autrement dit, l'agencement particulier des première, deuxième et troisième parois permet de réguler thermiquement plusieurs dispositifs de stockage électrique, disposés sur des parois distinctes de l'élément de refroidissement.

Selon un aspect particulier de l'invention, la bride de raccordement présente une embase montée sur une surface extérieure de l'élément de refroidissement et un capot amovible solidaire de l'embase.

Préférentiellement, ladite embase porte :
- un élément mâle ou femelle d'entrée du fluide caloporteur dans l'élément de refroidissement coopérant avec un élément femelle ou mâle respectivement porté par la paroi intérieure du capot, et/ou
- un élément mâle ou femelle de sortie du fluide caloporteur provenant dudit élément de refroidissement, coopérant avec un élément femelle ou mâle respectivement porté par la paroi intérieure du capot,

Le ou lesdits éléments femelle ou mâle dudit capot étant destinés à être raccordés à des tubulures de circulation de fluide caloporteur externes audit élément de refroidissement.

Selon un aspect de l'invention, les extrémités desdits premier et deuxième canaux débouchent sur deux bords opposés des première et deuxième parois et sont destinées à être obturées par des moyens de fermeture.

Avantageusement, ces moyens de fermeture peuvent affleurer les bords des canaux. Ainsi, les moyens de fermeture des extrémités ouvertes des canaux ne font pas saillie à partir des bords des parois de l'élément de refroidissement, de sorte à minimiser l'encombrement de cet élément de refroidissement.

L'élément de refroidissement selon l'invention peut par exemple être obtenu par extrusion.

Un tel procédé de fabrication permet de fabriquer aisément un élément de refroidissement d'un dispositif de stockage électrique présentant des canaux de circulation de fluide caloporteur au sein de ses parois.

En outre, l'extrusion permet de former des parois d'épaisseurs relativement importantes, de l'ordre de 1.5 mm au minimum.

On comprend donc que la tenue mécanique de l'élément de refroidissement formant support aux dispositifs de stockage électrique est optimisée.

Comparée au brasage qui utilise généralement des alliages d'aluminium de la série 3000, l'extrusion permet l'utilisation d'autres alliages d'aluminium (de la série 6000, par exemple) présentant de meilleures caractéristiques mécaniques.

Du fait de la tenue mécanique améliorée de l'élément de refroidissement issu d'une filière d'extrusion, le fluide caloporteur peut être de l'eau glycolée ou du réfrigérant circulant sous une pression plus importante que l'eau glycolée.

Selon un autre aspect, les premier et deuxième canaux s'étendent parallèlement dans deux plans distincts.

Une telle configuration permet de réaliser un échange thermique sur toute la longueur d'un dispositif de stockage électrique.

Ainsi, la régulation thermique de chaque dispositif de stockage électrique est homogène.

Selon un autre aspect, les première et deuxième parois de support et de régulation thermique présentent des moyens de fixation des dispositifs de stockage électrique.

Selon un autre aspect, au moins une desdites parois de support et de régulation thermique présente des moyens de fixation des dispositifs de stockage électrique sur les deux surfaces de celle-ci.

Une même paroi de l'élément de refroidissement peut ainsi présenter deux surfaces d'échange thermique et donc réguler thermiquement des modules électriques disposés de chaque côté de la paroi.

La présente invention concerne également un système de traitement thermique pour véhicule automobile, comprenant au moins un dispositif de stockage électrique porté au moins par un élément de refroidissement selon la présente invention.

### 4. Liste des figures

D'autres caractéristiques et avantages de l'invention apparaîtront plus clairement à la lecture de la description suivante d'un mode de réalisation, donné à titre de simple exemple illustratif et non limitatif, et des dessins annexés, parmi lesquels :
- la figure 1 est une vue en perspective partielle d'un élément de refroidissement d'un dispositif de stockage électrique selon un mode de réalisation particulier de l'invention ;
- la figure 2 est une vue filaire de détail montrant les connexions fluidiques ménagées dans deux parois de l'élément de refroidissement de la figure 1 entre deux canaux de circulation d'un fluide caloporteur et entre un canal et une bride de raccordement montée sur une surface extérieure de l'élément de refroidissement ;
- la figure 3 est une vue de détail en perspective de la bride de raccordement ;
- la figure 4 est une vue de dessus de la bride de raccordement de la figure 4, et
- la figure 5 est une vue en coupe de l'élément de refroidissement au niveau de la bride de raccordement.

### 5. Description détaillée de l'invention

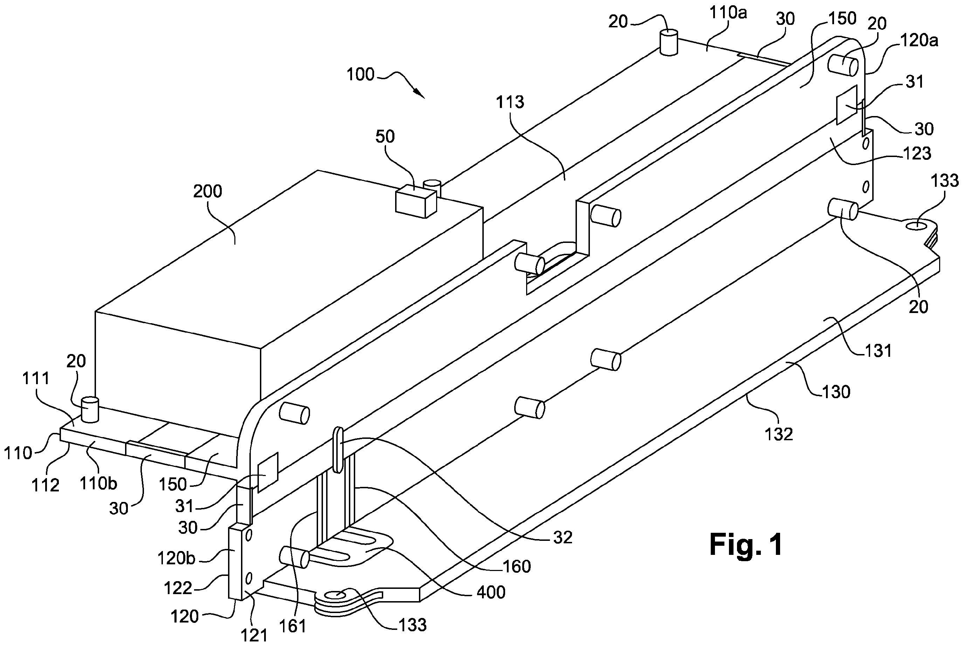

La figure 1 est une vue partielle en perspective d'un élément de refroidissement 100 d'un dispositif de stockage électrique 200 pour véhicule automobile.

Un tel élément de refroidissement 100 est destiné à supporter une pluralité de dispositifs de stockage électrique 200, dont un seul est représenté pour des raisons de clarté. Cet élément de refroidissement 100 et les dispositifs de stockage électrique 200 qu'il supporte forment un système de traitement thermique au sens de l'invention.

L'élément de refroidissement 100 illustré sur la figure 1 comprend au moins une première paroi 110 et une deuxième paroi 120 solidaires l'une de l'autre et disposées perpendiculairement l'une par rapport à l'autre. Autrement dit, la première paroi 110 s'étend principalement dans un premier plan perpendiculaire à un deuxième plan dans lequel s'étend principalement la deuxième paroi 120.

Chaque paroi 110, 120 comprend respectivement une face intérieure 111, 121 et une face extérieure 112, 122 orientées respectivement vers le dispositif de stockage électrique 200, ou à l'opposé de ce dispositif de stockage électrique 200.

Chacune des faces intérieures 111, 121 est configurée pour recevoir un ou plusieurs dispositifs de stockage électrique 200 thermiquement couplés à celles-ci.

Le ou les dispositifs de stockage électriques 200 sont solidarisés aux faces intérieures 111, 121 par le biais de moyens de fixation 20 de façon à ce que ces derniers soient en contact thermique avec celles-ci.

La première paroi 110 comprend un premier canal 113 de circulation d'un fluide caloporteur et la deuxième paroi 120 comprend un deuxième canal 123 de circulation d'un fluide caloporteur.

Chaque canal 113, 123 de circulation d'un fluide caloporteur est respectivement formé dans l'épaisseur de la paroi 110, 120, les canaux 113, 123 s'étendant parallèlement l'un par rapport à l'autre.

Bien que cela ne soit pas visible sur la figure 1, l'élément de refroidissement 100 peut comprendre d'autres parois dans lesquelles s'étendent un ou plusieurs canaux de circulation d'un fluide caloporteur et sur lesquelles sont solidarisés un ou plusieurs dispositifs de stockage électrique.

Les parois de l'élément de refroidissement 100 assurent ainsi une fonction d'échangeur thermique en plus d'une fonction structurelle. En ce sens, ces parois pourront ci-après être appelées « parois de support et de régulation thermique ».

Une telle solution permet de s'affranchir de la mise en oeuvre d'échangeurs thermiques disposés dans l'enceinte intérieure d'un boîtier de protection dans lequel seraient agencés les dispositifs de stockage électrique, conformément à l'approche de l'art antérieur.

Par ailleurs, les parois 110, 120 forment deux plans de support et d'échange thermique (de refroidissement notamment) distincts avec des dispositifs de stockage électrique.

Un tel agencement des plans d'échange thermique permet de réduire l'encombrement de l'élément de refroidissement 100 tout en optimisant son efficacité en termes de régulation thermique.

Dans le mode de réalisation illustré sur la figure 1, chaque dispositif de stockage électrique 200 est configuré pour être en contact thermique à la fois avec la première paroi 110 de l'élément de refroidissement 100 et avec la deuxième paroi 120 de cet élément de refroidissement 100.

Il se pourrait toutefois qu'un dispositif de stockage électrique ne soit en contact thermique qu'avec une seule paroi, en l'espèce la première paroi 110, de l'élément de refroidissement.

Les extrémités longitudinales des premier et deuxième canaux 113, 123 débouchent respectivement par une ouverture sur deux bords 110a, 110b, 120a, 120b opposés des première et deuxième parois 110, 120.

Chaque ouverture est obturée par un bouchon de fermeture 30 affleurant avec la surface plane du bord 110a, 110b, 120a, 120b correspondant.

Par ailleurs, l'élément de refroidissement 100 comprend une bride 400 de raccordement configurée pour alimenter en fluide caloporteur le circuit de circulation interne de l'élément de refroidissement et pour évacuer le fluide caloporteur provenant de ce circuit de circulation interne de l'élément de refroidissement.

Tel qu'illustré, la bride 400 de raccordement est montée sur la face extérieure d'une troisième paroi 130 prolongeant la deuxième paroi 120 de l'élément de refroidissement 100 et s'étendant perpendiculairement à cette dernière.

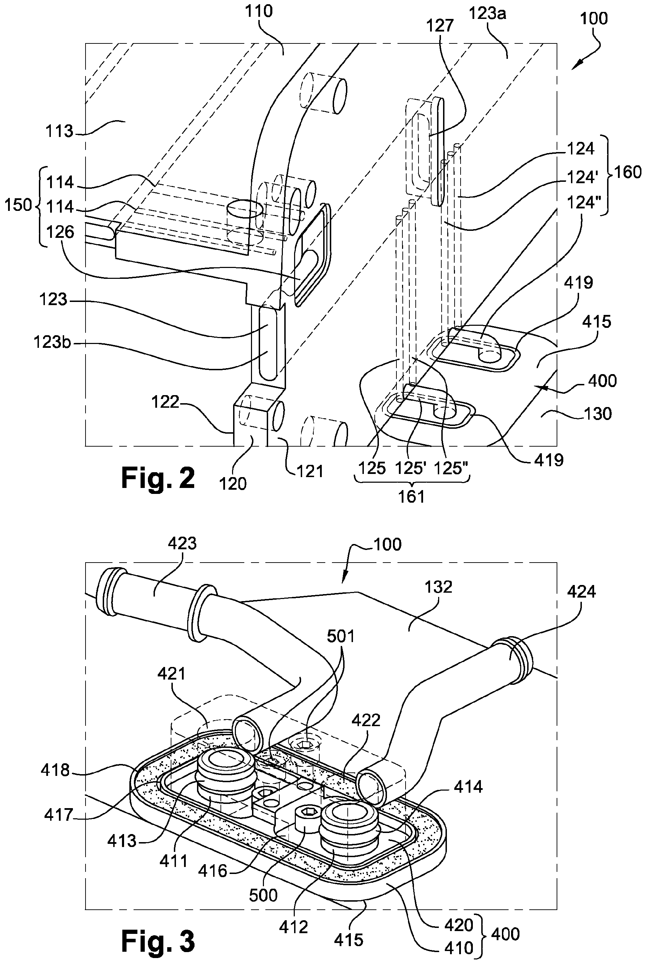

Cette bride 400 de raccordement sera décrite plus en détails par la suite en relation avec les figures 3 à 5.

Par ailleurs, les premier et deuxième canaux 113, 123 sont reliés fluidiquement par le biais de moyens de connexion 150 fluidique. Ces moyens de connexion 150 fluidique, visibles sur les figures 1 et 2, permettent au fluide caloporteur de circuler du premier canal 113 de la première paroi 110 vers le deuxième canal 123 de la deuxième paroi 120, et inversement.

En outre, au moins un canal de circulation de fluide, en l'occurrence le deuxième canal 123 sur la figure 1, est relié fluidiquement à la bride 400 de raccordement par le biais de conduites d'alimentation et d'évacuation 160, 161 fluidique permettant d'alimenter en fluide caloporteur les canaux 113, 123 et d'évacuer le fluide caloporteur de ces canaux (figures 1 et 2).

L'élément de refroidissement 100 comprend en outre :
- des passages 133 pour le passage ou la fixation de moyens de préhension de l'élément de refroidissement 100, tels que des boulons à oeil,
- des accroches 50 configurées pour permettre la fixation d'au moins un élément de renfort structurel (non représenté).

Les dispositifs de stockage électrique peuvent être fixés sur la face intérieure 111 de la première paroi 110 horizontale et sur la face intérieure 121 de la deuxième paroi 120 verticale par le biais de moyens de fixation 20. Les termes « horizontal » et « vertical » doivent ici être entendus par rapport à une orientation de l'élément de refroidissement 100 lorsqu'il est monté sur le véhicule auquel il est destiné.

Dans l'exemple illustré sur la figure 1, les moyens de fixation 20 des dispositifs de stockage électrique sur les faces intérieures 111, 121 sont des plots de fixation de forme cylindrique.

Les plots de fixation sont vissés dans les parois de l'élément de refroidissement 100.

Dans ce mode de réalisation, chaque dispositif de stockage électrique est fixé sur une paroi de l'élément de refroidissement 100 par le biais de quatre plots 20.

Le nombre et la répartition des plots sur l'élément de refroidissement 100 peuvent être adaptés en fonction de la forme des dispositifs de stockages électriques.

Il est à noter que, dans l'exemple illustré, la face intérieure 131 de la troisième paroi 130 horizontale n'est pas destinée à supporter de module(s) électrique(s).

Tel qu'illustré sur la figure 2, des moyens de connexion 150 fluidique sont ménagées dans l'épaisseur des parois 110, 120 de manière à permettre au fluide caloporteur de circuler du premier canal 113 vers le deuxième canal 123, et inversement.

Une telle configuration permet de réduire l'encombrement de l'élément de refroidissement 100 et de minimiser les risques de fuites en s'affranchissant de la mise en oeuvre de connectiques externes.

Les moyens de connexion 150 fluidique sont situés à proximité de chaque extrémité longitudinale des parois 110, 120 comme cela est visible sur la figure 1.

Chacun des moyens de connexion 150 comprend ici plusieurs conduits 114 parallèles ménagés dans la première paroi 110 et s'étendant transversalement au premier canal 113, et un évidement 126 ménagé dans la deuxième paroi 120, au-dessus du deuxième canal 123.

L'évidement 126 est configuré pour relier fluidiquement le deuxième canal 123 aux conduits 114 débouchant dans le premier canal 113 et dans l'évidement 126.

Il est obturé par un bouchon 31 de fermeture étanche (figure 1).

Les extrémités longitudinales des premier et deuxième canaux 113, 123 sont obturées par le biais de bouchons 30 de fermeture étanche qui sont affleurant avec les bords de l'élément de refroidissement 100.

Par ailleurs, la deuxième paroi 120 comprend un évidement 127 obturé par un bouchon 32 de fermeture étanche qui est destiné à former une cloison interne étanche scindant le deuxième canal 123 en deux parties 123a, 123b fluidiquement isolées l'une de l'autre.

L'évidement 127 est situé entre les deux évidements 126 des moyens de connexion 150 fluidique.

Un tel évidement peut être aisément réalisé par usinage, notamment sur un profil extrudé.

Les moyens de connexion fluidique peuvent ainsi relier au moins deux canaux ménagés dans une même paroi (ou un même plan) de l'élément de refroidissement, ou deux canaux ménagés dans deux parois distinctes (ou plans distincts) de l'élément de refroidissement. Ils sont obtenus par usinage (perçage ou rainurage, par exemple).

Par ailleurs, l'élément de refroidissement 100 comprend un port 160 d'alimentation de fluide caloporteur vers la première partie 123a du deuxième canal 123 et un port 161 d'évacuation de fluide caloporteur provenant de la deuxième partie 123b du deuxième canal 123.

Chaque port 160, 161 d'alimentation et d'évacuation comprend respectivement des conduites 124, 124', 125, 125' de circulation, ménagées dans l'épaisseur de la deuxième paroi 120, et des cavités 124", 125", ménagées dans la troisième paroi 130 de l'élément de refroidissement 100.

Les conduites 124, 124', 125, 125' sont configurées pour relier respectivement les première et deuxième partie 123a, 123b du deuxième canal 123 à la bride 400 de raccordement.

Les conduites 124, 124', 125, 125' de circulation forment d'une part des conduites d'alimentation 124, 124' en fluide caloporteur et d'autre part des conduites d'évacuation 125, 125' de ce même fluide, ou inversement.

Les conduites d'alimentation 124, 124' sont fluidiquement reliées à la première partie 123a du deuxième canal 123 et les conduites d'évacuation 125, 125' sont fluidiquement reliées à la deuxième partie 123b du deuxième canal 123.

En d'autres termes, les conduites d'alimentation 124, 124' et d'évacuation 125, 125' sont respectivement situées de part et d'autre de l'évidement 127 obturé par le bouchon de fermeture 32.

Les cavités 124", 125" qui présentent une forme sensiblement parallélépipédique, communiquent respectivement avec les conduites d'alimentation 124, 124' et d'évacuation 125, 125'.

Une telle configuration permet minimiser l'encombrement de l'élément de refroidissement 100 et de minimiser les risques des fuites en s'affranchissant de conduites externes aux parois.

Par ailleurs, la mise en oeuvre de plusieurs conduites d'alimentation 124, 124' et de plusieurs conduites d'évacuation 125, 125' permet de limiter les pertes de charge.

Tel qu'illustré sur la figure 3, l'élément de refroidissement 100 porte sur une de ses faces extérieures une bride 400 de raccordement configurée pour assurer la connexion/liaison fluidique entre des conduites 423, 424 d'alimentation et d'évacuation de fluide caloporteur externes à l'élément de refroidissement 100 et le circuit de circulation s'étendant au sein de l'élément de refroidissement 100.

Comme décrit précédemment, ce circuit de circulation au sein de l'élément de refroidissement comprend plusieurs canaux de circulation d'un fluide caloporteur ménagés dans une ou plusieurs parois de l'élément de refroidissement 100.

La bride 400 de raccordement est destinée à permettre le branchement entre un circuit de gestion thermique du véhicule et le pack batterie.

La bride 400 de raccordement est montée, de façon étanche, sur une surface extérieure de l'élément de refroidissement 100.

En l'espèce, la bride 400 de raccordement est fixée sur la face externe 132 de la troisième paroi 130 de support du boitier 100.

La bride 400 de raccordement comprend une embase 410 rectangulaire fixée sur la troisième paroi 130 et un capot 420 parallélépipédique qui vient se placer sur l'embase 410.

L'embase 410 présente un élément mâle d'entrée 411 fluidique et un élément mâle de sortie 412 fluidique.

Les éléments mâles d'entrée et de sortie 411, 412 fluidique font saillie perpendiculairement depuis la surface supérieure 416 de l'embase 410 et présentent chacun un orifice intérieur cylindrique débouchant de sorte à permettre le passage d'un fluide caloporteur.

Les éléments mâles d'entrée et de sortie 411, 412 fluidique sont configurés pour s'insérer respectivement dans des éléments femelles 421, 422 d'entrée et de sortie fluidique portés par le capot 420 de la bride 400 de raccordement.

Les éléments mâles 411, 412 et femelles 421, 422 sont de formes complémentaires.

Les éléments femelles 421, 422 d'entrée et de sortie fluidique sont respectivement solidarisés par collage ou brasage à une extrémité des tubulures 423, 424 d'alimentation en fluide caloporteur (en provenance du circuit de gestion thermique du véhicule) et d'évacuation du fluide caloporteur (vers le circuit de gestion thermique du véhicule).

L'autre extrémité des tubulures 423, 424 est destinée à être raccordée à un tuyau flexible en polymère, en EPDM par exemple, ou bien à recevoir un dispositif de connexion rapide.

Les extrémités des tubulures 423, 424 débouchant à l'intérieur du capot 420 sont orientées perpendiculairement aux éléments mâles d'entrée et de sortie 411, 412 fluidique ce qui permet de minimiser l'encombrement de la bride 400 de raccordement.

Par ailleurs, les éléments mâles d'entrée et de sortie 411, 412 fluidique portent chacun un joint 413, 414 d'étanchéité, tel un joint torique ou un joint plat, qui est disposé dans une rainure circulaire ménagée sur la surface extérieure de chaque élément.

Les joints 413, 414 d'étanchéité permettent d'assurer l'étanchéité entre les éléments mâles 411, 412 et femelles 421, 422, et donc entre l'embase 410 et le capot 420 de la bride 400 lors du fonctionnement du pack batterie.

L'embase 410 de la bride 400 est plaquée contre la troisième paroi 130 de support du boitier 100 et est solidarisée à celle-ci par le biais de vis de fixation 500.

Il est cependant tout à fait possible d'imaginer d'autres solutions de fixation étanche, comme par exemple une fixation par encliquetage (clipsage), par collage ou brasage.

Par ailleurs, l'embase 410 de la bride 400 comprend des trous taraudés 4101 configurés pour recevoir des vis de fixation 501 du capot 420 sur l'embase 410.

Les trous taraudés 4101 sont alignés dans cet exemple et ménagés entre les éléments mâles d'entrée et de sortie 411, 412 fluidique.

La surface supérieure 416 de l'embase 410 porte un joint d'étanchéité 418 disposé dans une rainure 417 ménagée sur le pourtour de celle-ci.

Ce joint d'étanchéité 418 permet d'assurer l'étanchéité entre la bride 400 et un boîtier de réception du système de traitement thermique. Pour rappel on entend par « système de traitement thermique » un système comprenant au moins l'élément de refroidissement 100 sur lequel est agencé au moins un dispositif de stockage électrique 200.

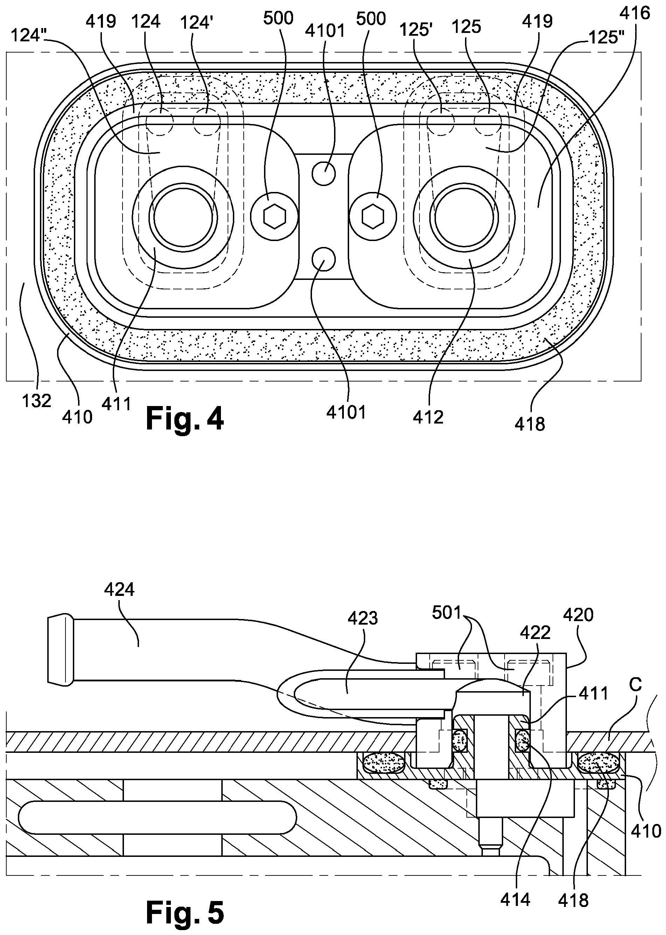

Sur la figure 5, ce joint d'étanchéité 418 est écrasé par le couvercle C du boîtier de réception du système de traitement thermique.

Par ailleurs, la surface inférieure 415 de l'embase 410, destinée à être en contact avec l'élément de refroidissement 100, et la surface supérieure 416, destinée à être en contact avec le capot 420 de la bride 400, présentent un état de surface lisse ou avec un minimum d'aspérités ou rugosités.

Un tel état de surface permet à la bride 400 de raccordement d'assurer une liaison électrique optimale entre l'élément de refroidissement 100 et le boîtier de réception du système de traitement thermique en cas de défaillance de l'un des modules électriques.

En outre, la surface de contact entre l'élément de refroidissement 100 et la bride 400 de raccordement doit être suffisamment importante de sorte à ce que la résistance électrique entre ceux-ci soit négligeable par rapport à la résistance électrique entre l'élément de refroidissement 100 et le boîtier de réception du système de traitement thermique.

L'embase 410 de la bride 400 de raccordement est fabriquée en aluminium ou dans tout autre matériau conducteur.

Par ailleurs, tel qu'illustré sur la figure 2, il est prévu des joints d'étanchéité 419 situés sur le pourtour des cavités 124", 125" de sorte à assurer l'étanchéité entre la troisième paroi de l'élément de refroidissement 100 et la bride 400 de raccordement.

La bride de 400 de raccordement assure la connexion fluidique entre les conduits extérieurs à l'élément de refroidissement 100 et le circuit interne s'étendant dans les parois de l'élément de refroidissement 100 du dispositif de stockage électrique.

La bride de 400 de raccordement détermine l'orientation des entrées et sorties de fluide. Elle est fixée mécaniquement sur l'élément de refroidissement 100. En d'autres termes, sa fixation ne nécessite pas de brasage.

La bride de 400 de raccordement assure ainsi trois fonctions, à savoir :
- elle assure l'étanchéité fluidique entre le circuit de circulation interne à l'élément de refroidissement et le circuit externe à cet élément de refroidissement ;
- elle assure l'étanchéité entre l'élément de refroidissement et le boîtier de réception du système de traitement thermique (figure 5) ;
- la fonction de "potential equalization" ou de continuité électrique entre l'élément de refroidissement 100 formant échangeur et le véhicule par le biais de la bride de 400 de raccordement (l'élément de refroidissement 100 est ainsi à la masse).

Il est à noter que l'élément de refroidissement conforme à l'invention peut ne pas mettre en oeuvre une bride de raccordement telle que décrite précédemment, mais des conduits de raccordement collés ou soudés sur la surface extérieure de l'élément de refroidissement.

Dans un mode de réalisation préférentiel, l'élément de refroidissement et les bouchons de fermeture sont en aluminium.

L'élément de refroidissement est obtenu par extrusion de manière à ce que celui-ci puisse présenter des formes complexes et une tenue mécanique améliorée.

Les bouchons de fermeture sont, par exemple, des bouchons matés, des bouchons avec ou sans tenon, des bouchons soudés, des bouchons collés, ou des bouchons en élastomère, en EPDM notamment, emmanchés en force.

Les bouchons sont affleurants avec les bords de l'élément de refroidissement de sorte à minimiser l'encombrement de celui-ci.

Dans le mode de réalisation illustré, la paroi intérieure des canaux de circulation est lisse.

Il peut toutefois être envisagé que les parois intérieures des canaux présentent des reliefs (picots, par exemple) de sorte à augmenter la surface d'échange thermique et donc le transfert de chaleur entre les modules électriques et le fluide caloporteur circulant au sein des parois de l'élément de refroidissement. Le nombre et les dimensions des reliefs sont un compromis entre performance thermique et perte de charge du fluide caloporteur dans les canaux.

Par ailleurs, chaque canal de circulation peut présenter de multiples canaux internes.

Le fluide caloporteur mis en oeuvre dans l'élément de refroidissement conforme à l'invention peut être de l'eau glycolée ou un liquide réfrigérant, notamment du R134a ou du 1234YF.

Chaque paroi de support et d'échange thermique comprend un ou plusieurs canaux de circulation de fluide caloporteur.

Le nombre de canaux par paroi est fonction notamment des dimensions des modules électriques et de leur puissance.

Les parois comprennent des moyens de fixation des modules électriques qui prennent notamment la forme :
- d'évidements configurés pour permettre l'insertion de tirants, et/ou
- de trous taraudés configurés pour permettre l'insertion de vis, et/ou
- de plots configurés pour être emmanchés en force, soudés, rivetés ou encliquetés aux parois. Deux plots disposés en regard de chaque côté d'une paroi peuvent être solidarisés l'un à l'autre par vissage, l'un des plots présentant une partie mâle filetée au niveau de sa base et l'autre plot présentant une partie femelle taraudée au niveau de sa base venant coopérer avec la partie mâle filetée.

Dans un mode de réalisation particulier de l'invention, un même module électrique est en contact avec au moins deux parois de l'élément de refroidissement.

Dans un mode de réalisation particulier de l'invention, la troisième paroi 130 comprend un troisième canal de circulation fluidique relié fluidiquement au deuxième canal 123 ou à la bride 400 de raccordement.

Une ou plusieurs parois de l'élément de refroidissement peuvent comprendre plusieurs canaux de circulation fluidiquement couplés par le biais de liaisons réalisées dans l'épaisseur de la paroi.

Dans un mode de réalisation particulier de l'invention, l'élément de refroidissement comprend trois parois de support et de régulation thermique dont deux parois sont parallèles entre elles et sont solidaires l'une de l'autre par le biais d'une paroi s'étendant perpendiculairement à celles-ci, de sorte que l'élément de refroidissement présente une section transversale en forme de « U ».

Dans un mode de réalisation particulier de l'invention, chaque face d'au moins une paroi de l'élément de refroidissement est destinée à supporter des dispositifs de stockage électriques.

Dans un mode de réalisation particulier de l'invention, l'embase de la bride de raccordement comprend les éléments femelles et le capot de la bride de raccordement porte les éléments mâles.

Dans un mode de réalisation particulier de l'invention, l'élément de refroidissement porte deux brides de raccordement comprenant chacune un unique élément mâle ou femelle.

Cette approche est adaptée lorsque l'entrée et la sortie fluidique ne sont pas localisées au même endroit, notamment dans le cas d'une circulation fluidique non bouclée au sein de l'élément de refroidissement.

Dans un autre mode de réalisation, le capot de la bride de raccordement est réalisé par un procédé d'injection plastique.

Dans un autre mode de réalisation, la bride de raccordement ne remplit pas la fonction de continuité électrique ("potential equalization") et n'assure pas liaison électrique entre l'élément de refroidissement et le boîtier de réception du système de traitement thermique.

## Revendications

1. Elément de refroidissement (100) d'un dispositif de stockage électrique (200) pour véhicule automobile comprenant au moins une première paroi (110) s'étendant principalement dans un premier plan et dans laquelle est ménagé au moins un premier canal (113) et au moins une deuxième paroi (120) s'étendant principalement dans un deuxième plan et dans laquelle est ménagé au moins un deuxième canal (123), le premier canal (113) et le deuxième canal (123) étant aptes à être empruntés par un fluide caloporteur, **caractérisé en ce que** le premier plan dans lequel s'étend la première paroi (110) et le deuxième plan dans lequel s'étend la deuxième paroi (120) sont sécants, et **en ce qu'**au moins la première paroi (110) est configurée pour porter le dispositif de stockage électrique (200), et **en ce que** l'élément de refroidissement comprend des moyens de connexion fluidique configurés pour connecter le premier canal ménagé dans la première paroi au deuxième canal ménagé dans la deuxième paroi, chaque moyen de connexion fluidique étant ménagé au sein desdites première et deuxième parois.

2. Elément de refroidissement (100) selon la revendication précédente, dans lequel le dispositif de stockage électrique (200) est agencé au contact de la première paroi (110) et de la deuxième paroi (120).

3. Elément de refroidissement (100) selon l'une quelconque des revendications précédentes, dans lequel le premier plan dans lequel s'étend principalement la première paroi (110) et le deuxième plan dans lequel s'étend principalement la deuxième paroi (120) sont perpendiculaires.

4. Elément de refroidissement (100) selon l'une quelconque des revendications précédentes, **caractérisé en ce qu'**il comprend des moyens de connexion (150) fluidique configurés pour connecter le premier canal (113) ménagé dans la première paroi (110) au deuxième canal (123) ménagé dans la deuxième paroi (120), chaque moyen de connexion (150) fluidique étant ménagé au sein desdites première et deuxième parois (110, 120).

5. Elément de refroidissement (100) selon l'une quelconque des revendications précédentes, comprenant au moins une première conduite (124, 124', 125, 125') destinée à alimenter le premier et/ou le deuxième canal (113, 123) en fluide caloporteur et au moins une deuxième conduite (124, 124', 125, 125') destinée à évacuer le fluide caloporteur circulant dans le premier et/ou le deuxième canal (113, 123), la première conduite (124, 124', 125, 125') et la deuxième conduite (124, 124', 125, 125') étant ménagées dans la deuxième paroi (120) de l'élément de refroidissement (100).

6. Elément de refroidissement (100) selon la revendication précédente, comprenant au moins une bride (400) de raccordement fluidique configuré pour raccorder l'élément de refroidissement (100) à un circuit externe par l'intermédiaire de la première et/ou de la deuxième conduite (124, 124', 125, 125').

7. Elément de refroidissement (100) selon l'une quelconque des revendications précédentes en combinaison avec la revendication 6, comprenant une troisième paroi (130) s'étendant principalement dans un troisième plan, ce troisième plan étant parallèle au premier plan dans lequel s'étend la première paroi (110) et sécant du deuxième plan dans lequel s'inscrit la deuxième paroi (120), la bride (400) de raccordement fluidique étant fixée sur cette troisième paroi (130).

8. Elément de refroidissement (100) selon l'une quelconque des revendications précédentes, **caractérisé en ce que** les extrémités desdits premier et deuxième canaux (113, 123) débouchent sur deux bords (110a, 110b, 120a, 120b) opposés des première et deuxième parois (110, 120) et sont destinées à être obturées par des moyens (30) de fermeture.

9. Elément de refroidissement (100) selon l'une quelconque des revendications précédentes, **caractérisé en ce qu'**il est obtenu par extrusion.

10. Système de traitement thermique (1) pour véhicule automobile, comprenant au moins un dispositif de stockage électrique (200) porté au moins par un élément de refroidissement (100) selon l'une quelconque des revendications précédentes.

## Patentansprüche

1. Kühlelement (100) einer elektrischen Speichervorrichtung (200) für ein Kraftfahrzeug, beinhaltend mindestens eine erste Wand (110), die sich im Wesentlichen in einer ersten Ebene erstreckt und in der mindestens ein erster Kanal (113) eingerichtet ist, und mindestens eine zweite Wand (120), die sich im Wesentlichen in einer zweiten Ebene erstreckt und in der mindestens ein zweiter Kanal (123) eingerichtet ist, wobei der erste Kanal (113) und der zweite Kanal (123) dazu fähig sind, von einem Wärmeträgerfluid durchflossen zu werden, **dadurch gekennzeichnet, dass** sich die erste Ebene, in der sich die erste Wand (110) erstreckt, und die zweite Ebene, in der sich die zweite Wand (120) erstreckt, schneiden und dass mindestens die erste Wand (110) dazu konfiguriert ist, die elektrische Speichervorrichtung (200) zu tragen, und dass das Kühlelement Fluidverbindungsmittel beinhaltet, die dazu konfiguriert sind, den ersten Kanal, der in der ersten Wand eingerichtet ist, mit dem zweiten Kanal, der in der zweiten Wand eingerichtet ist, zu verbinden, wobei jedes Fluidverbindungsmittel innerhalb der ersten und zweiten Wand eingerichtet ist.

2. Kühlelement (100) nach dem vorhergehenden Anspruch, wobei die elektrische Speichervorrichtung (200) mit der ersten Wand (110) und der zweiten Wand (120) in Kontakt angeordnet ist.

3. Kühlelement (100) nach einem beliebigen der vorhergehenden Ansprüche, wobei die erste Ebene, in der sich die erste Wand im Wesentlichen erstreckt (110), und die zweite Ebene, in der sich die zweite Wand (120) im Wesentlichen erstreckt, senkrecht zueinander sind.

4. Kühlelement (100) nach einem beliebigen der vorhergehenden Ansprüche, **dadurch gekennzeichnet, dass** es Fluidverbindungsmittel (150) beinhaltet, die dazu konfiguriert sind, den ersten Kanal (113), der in der ersten Wand (110) eingerichtet ist, mit dem zweiten Kanal (123), der in der zweiten Wand (120) eingerichtet ist, zu verbinden, wobei jedes Fluidverbindungsmittel (150) innerhalb der ersten und zweiten Wand (110, 120) eingerichtet ist.

5. Kühlelement (100) nach einem beliebigen der vorhergehenden Ansprüche, das mindestens eine erste Leitung (124, 124', 125, 125'), die dazu bestimmt ist, den ersten und/oder den zweiten Kanal (113, 123) mit Wärmeträgerfluid zu versorgen, und mindestens eine zweite Leitung (124, 124', 125, 125'), die dazu bestimmt ist, das Wärmeträgerfluid, das in dem ersten und/oder dem zweiten Kanal (113, 123) strömt, abzuführen, beinhaltet, wobei die erste Leitung (124, 124', 125, 125') und die zweite Leitung (124, 124', 125, 125') in der zweiten Wand (120) des Kühlelements (100) eingerichtet sind.

6. Kühlelement (100) nach dem vorhergehenden Anspruch, das mindestens einen Fluidanschlussflansch (400) beinhaltet, der dazu konfiguriert ist, das Kühlelement (100) mittels der ersten und/oder der zweiten Leitung (124, 124', 125, 125') an einen externen Kreislauf anzuschließen.

7. Kühlelement (100) nach einem beliebigen der vorhergehenden Ansprüche in Kombination mit Anspruch 6, das eine dritte Wand (130) beinhaltet, die sich im Wesentlichen in einer dritten Ebene erstreckt, wobei diese dritte Ebene zu der ersten Ebene, in der sich die erste Wand (110) erstreckt, parallel ist und die zweite Ebene, in der sich die zweite Wand (120) befindet, schneidet, wobei der Fluidanschlussflansch (400) an dieser dritten Wand (130) befestigt ist.

8. Kühlelement (100) nach einem beliebigen der vorhergehenden Ansprüche, **dadurch gekennzeichnet, dass** die Enden des ersten und zweiten Kanals (113, 123) an zwei gegenüberliegenden Rändern (110a, 110b, 120a, 120b) der ersten und zweiten Wand (110, 120) münden und dazu bestimmt sind, durch Verschlussmittel (30) abgedichtet zu sein.

9. Kühlelement (100) nach einem beliebigen der vorhergehenden Ansprüche, **dadurch gekennzeichnet, dass** es durch Extrusion erhalten wird.

10. Wärmebehandlungssystem (1) für ein Kraftfahrzeug, das mindestens eine elektrische Speichervorrichtung (200) beinhaltet, die durch mindestens ein Kühlelement (100) nach einem beliebigen der vorhergehenden Ansprüche getragen wird.

## Claims

1. Cooling element (100) of an electrical storage device (200) for a motor vehicle, comprising at least one first wall (110) extending primarily in a first plane and in which is created at least one first channel (113) and at least one second wall (120) extending primarily in a second plane and in which is created at least one second channel (123), the first channel (113) and the second channel (123) being adapted to be taken by a heat transport fluid, **characterized in that** the first plane in which the first wall (110) extends and the second plane in which the second wall (120) extends intersect, and **in that** at least the first wall (110) is configured to support the electrical storage device (200), and **in that** the cooling element comprises fluidic connection means configured to connect the first channel created in the first wall to the second channel created in the second wall, each fluidic connection means being created within said first and second walls.

2. Cooling element (100) according to the preceding claim, in which the electrical storage device (200) is arranged in contact with the first wall (110) and with the second wall (120).

3. Cooling element (100) according either one of the preceding claims, in which the first plane in which the first wall (110) primarily extends and the second plane in which the second wall (120) primarily extends are perpendicular.

4. Cooling element (100) according to any one of the preceding claims, **characterized in that** it comprises fluidic connection means (150) configured to connect the first channel (113) created in the first wall (110) to the second channel (123) created in the second wall (120), each fluidic connection means (150) being created within said first and second walls (110, 120).

5. Cooling element (100) according to any one of the preceding claims, comprising at least one first duct (124, 124', 125, 125') intended to supply the first and/or the second channel (113, 123) with heat transport fluid and at least one second duct (124, 124', 125, 125') intended to evacuate the heat transport fluid circulating in the first and/or the second channel (113, 123), the first duct (124, 124', 125, 125') and the second duct (124, 124', 125, 125') being created in the second wall (120) of the cooling element (100).

6. Cooling element (100) according to the preceding claim, comprising at least one fluidic connection flange (400) configured to connect the cooling element (100) to an external circuit via the first and/or the second duct (124, 124', 125, 125').

7. Cooling element (100) according to any one of the preceding claims in combination with Claim 6, comprising a third wall (130) extending primarily in a third plane, and that third plane being parallel to the first plane in which the first wall (110) extends and intersecting the second plane in which the second wall (120) is inscribed, the fluidic connection flange (400) being fixed to that third wall (130).

8. Cooling element (100) according to any one of the preceding claims, **characterized in that** the ends of said first and second channels (113, 123) discharge at two opposite edges (110a, 110b, 120a, 120b) of the first and second walls (110, 120) and are intended to be blocked by the closure means (30).

9. Cooling element (100) according to any one of the preceding claims, **characterized in that** it is obtained by extrusion.

10. Thermal treatment system (1) for a motor vehicle, comprising at least one electrical storage device (200) carried at least by a cooling element (100) according to any one of the preceding claims.
